# EUROPÄISCHE PATENTSCHRIFT

(11) **EP 1 943 478 B1**
(45) Veröffentlichungstag und Bekanntmachung des Hinweises auf die Patenterteilung: **11.05.2016**
(21) Anmeldenummer: 06806495.5
(22) Anmeldetag: 24.10.2006
(51) Int. Cl.: G01B 7/06, B29C 47/92

(54) **FOLIENDICKENSENSOR MIT PORÖSEM BLÄSER**
FILM THICKNESS SENSOR HAVING A POROUS BLOWER
CAPTEUR D ÉPAISSEUR DE FEUILLES AVEC SOUFFLANTE POREUSE

(30) Priorität: 28.10.2005 DE 102005051675
(43) Veröffentlichungstag der Anmeldung: 16.07.2008
(73) Patentinhaber: Windmöller & Hölscher KG, 49525 Lengerich/Westf. (DE)
(72) Erfinder: BACKMANN, Martin, 49525 Lengerich (DE)
(86) Internationale Anmeldenummer: PCT/EP2006/010230
(87) Internationale Veröffentlichungsnummer: WO 2007/048571

(56) Entgegenhaltungen:
- EP-A- 1 681 531
- EP-A2- 0 943 413
- DE-A1- 4 002 155
- US-A- 3 528 002
- US-A- 4 433 571
- US-B1- 6 318 153

## Beschreibung

Die Erfindung betrifft ein Sensorsystem zum Messen der Dicke flachen, relativ zum Sensorsystem bewegten Materials nach Anspruch 1, eine Anlage zur Herstellung von Folie nach Anspruch 7, welche ein solches Sensorsystem umfasst, und ein Verfahren zum Betrieb einer Blasfolienanlage mit einem solchen Sensorsystem nach Anspruch 9.

Sensorsysteme zum Messen der Dicke flachen, relativ zum Sensorsystem bewegten Materials sind bekannt. Sie werden bevorzugt zur Messung der Dicke von gerade extrudierten Folien eingesetzt. Die Messwerte dienen der Regelung der Foliendicke. Flaches Material heißt daher im vorliegenden Zusammenhang in erster Linie folienförmiges oder bahnförmiges Material, das zumeist an dem Sensorsystem, das eine Sensorvorrichtung wie einen Sensorkopf umfasst, vorbeigeführt wird.
Zu den verwendeten Messverfahren gehören optische, radiometrische, induktive und kapazitive Messverfahren. Insbesondere bei der Herstellung empfindlicher oder klebriger Folie können jedoch durch Sensorsysteme, welche die Folie berühren, Schäden an derselben hervorgerufen werden. Daher schlägt die EP 591 239 B1 vor, eine Sensorvorrichtung mit einem Luftkissen von der Folie zu beabstanden.

Bei der solcherart beabstandeten Sensorvorrichtung handelt es sich bei der EP 591 239 B1 um einen kapazitiven Sensor, dessen beide Elektroden auf einer Seite der Folie auf einem Sensorkopf angebracht sind. Beide Elektroden weisen der Folie zugewandte Wirkflächen auf. Auch zwischen diesen Wirkflächen der beiden Elektroden prägt sich ein elektrisches Feld aus, das das Luftpolster zwischen Sensorvorrichtung und Folie, die Folie selber und den hinter der Folie befindlichen Raum, der hier ebenfalls mit Luft gefüllt ist, durchgreift. Hierbei besteht bekanntlich eine Abhängigkeit der Kapazität des Kondensators von der materialspezifischen Dielektrizität εᵣ der von dem elektrischen Feld durchdrungenen Stoffe (Luft und Folienmaterial). Eine Änderung der Stärke des Folienmaterials ändert damit die Kapazität des Kondensators. Es hat sich jedoch gezeigt, dass auch Schwankungen des Abstandes zwischen der Folie und den Wirkflächen der Elektroden die Kapazität des Kondensators verändern. Dieser Einfluss des Abstandes der Folie - beziehungsweise eines beliebigen flachen Materials - besteht auch bei den vorgenannten anderen Messprinzipien wie bei dem induktiven Messprinzip.

Die US 4,433,571 B schlägt an dieser Stelle vor, die Messspitze des Stabes mit einem Luftpolster von dem flachen Material zu beabstanden. Bei der Erzeugung des Luftpolsters wird die Verwendung porösen Materials empfohlen.
Die US 3,528,002 B bezieht sich auf Vorrichtungen, bei denen ein Sender und eine Emfangsvorrichtung sich zu beiden Seiten eines flachen Materials befinden, so dass die Dicke desselben den Abstand zwischen Sender und Empfänger bestimmt und die Signalstärke bei dem Empfänger ein Maß für die Dicke des Materials darstellt. Die US 3,528,002 B schlägt nun unter anderem vor, den berührenden Kontakt zwischen Sender sowie Empfänger und dem flachen Material durch ein Luftpolster abzulösen, bei dessen Erzeugung auch poröse Materialien verwendet werden sollen.
Insbesondere bei Blasfolienanlagen ändert sich der Abstand jedoch ständig, da die Folie flattert - was auch zu Kontakten zwischen Sensorvorrichtung und Folie führen kann.

Die DE 195 11 939 A1 schlägt daher vor, den Abstand zwischen Sensorvorrichtung und Folie ständig zu messen, nach diesen Messwerten die Position der Sensorvorrichtung zu regeln und durch Bewegungen in der radialen Richtung der Folienblase ständig an die Flatterbewegung der Folie anzupassen. Allerdings ist es hier zusätzlich notwendig, die Folie mit Unterdruckdüsen in den Randbereichen der Sensorvorrichtung anzusaugen und so das Flattern der Folie relativ zur Sensorvorrichtung zu begrenzen.
Ein anderer Lösungsansatz für dasselbe Problem ist Gegenstand der EP 801 290 B1. Hier wird ebenfalls vorgeschlagen, den Abstand zwischen Sensor und Folie permanent zu regeln, wobei das Mosssignal für die Regelung über eine Messung des Staudrucks zwischen Folie und Sensorvorrichtung gewonnen wird. Da die Bewegung der Sensorvorrichtung träger ist als die der flatternden Folie wird ergänzend vorgeschlagen, die Fehler, die bei der Dickenmessung durch einen schwankenden Abstand entstehen, folgendermaßen zu minimieren: Der tatsächliche Abstand zum Zeitpunkt der Dickenmessung wird gemessen. Der (fehlerhafte) Dickenmesswert wird anhand des Abstandsmesswertes mit Hilfe einer Fehlerfunktion korrigiert.
Eine weitere Möglichkeit besteht eben darin, nur dann zu messen, wenn der richtige Abstand eben gerade durchlaufen wird, was jedoch ungleiche Zeitintervalle zwischen den Messungen zur Folge hat.
Auch die zum Zeitpunkt der Ersteinreichung der vorliegenden Druckschrift noch unveröffentlichte EP 1681 531 A1 schlägt vor, mit einer ersten kapazitiven Messvorrichtung, die durch ein Luftpolster von der Folienblase beabstandet ist, die Foliendicke zu messen. Eine zweite schnell messende optischen Messeinrichtung misst den Abstand Folie Sensor zu den jeweiligen Messzeitpunkten der ersten Messeinrichtung. Aus einer Kalibriertabelle (Sensorabstand/Dickenmesswert) ergeben sich korrigierte Dickenmesswerte der Folie. Bei der Erzeugung des Luftpolsters können auch poröse Materialien zum Einsatz kommen.

Angesichts dieser Darstellung wird deutlich, dass die dargestellten Messvorrichtungen kompliziert, teuer und trotzdem fehleranfällig sind.

Die US 6,318,153 offenbart auch ein Sensorsystem zum Messen der Dicke einer Folienblase.

Die Aufgabe der vorliegenden Erfindung besteht daher darin, diesen Nachteilen abzuhelfen.
Zur Lösung dieser Aufgabe geht die vorliegende Erfindung von den letztgenannten vorveröffentlichten Dokumenten aus und löst die Aufgabe durch die Ansprüche 1, 5 und 7. Die vorliegende Erfindung macht sich hierbei zu nutze, dass sich Luftpolster bei Versuchen auf porösem oder mit Mikrolöchern versehenem Material als wesentlich stabiler erwiesen haben als auf anderen Materialien.
Damit spielen die Abstandsschwankungen eine geringere Rolle. Der Sensor kann daher wesentlich dichter gegen die Folie angestellt werden. Eine weitere Minimierung des Folienflatterns ist erreichbar, wenn die der Folie oder, allgemeiner, dem beliebigen flachen Material zugewandte Seite der Sensorvorrichtung regelrecht gegen das flache Material gedrückt wird. In der Regel wird dann dieses Material eine Gegenkraft aufbringen, die dem erfindungsgemäßen stabilen Luftpolster entgegenwirkt. Als Ergebnis kann sich dann ein Gleichgewichtszustand herausbilden, der das Flattern begrenzt. Die angesprochene Gegenkraft wird oft - je nach Anwendungsfall zumindest teilweise auch von anderen Gegenständen oder physikalischen Größen als dem flachen Material aufgebracht werden. Im Falle einer Blasfolienanlage spielt der Innendruck der Folienblase hier eine entscheidende Rolle.
In diesem Anwendungsfall ist es vorteilhaft, mit der der Folienblase zugewandten Fläche der Sensorvorrichtung über eine längere Zeitdauer - vielleicht während des gesamten Auftrags - in die Folienblase hinein zu drücken. Hierbei befindet sich das Luftpolster einer von außerhalb der Folienblase messenden Sensorvorrichtung in der radialen Richtung der Folienblase innerhalb des Sollradius derselben. Oft gilt das gleiche für die der Folie zugewandten Seite der Sensorvorrichtung und sogar Teile der Sensorvorrichtung selber.

Der Querschnitt der Folienblase kann sich hierbei an der Messstelle erheblich verformen. In der Regel fahren solche Sensoren in der Umfangsrichtung der Folienblase um dieselbe herum, um so das Dickenprofil der Blase entlang des Umfanges zu messen. Die Eindringtiefe des Luftpolsters in den Sollradius der Blase kann vorteilhafterweise 1 bis 5 Zentimeter betragen. Sie kann sogar 5 bis 15 Zentimeter betragen. Interessant bei dieser Ausprägung der Erfindung ist, dass die Eindringtiefe nicht als Folge eines Lageregelungsvorgangs der Sensorvorrichtung zustande kommt, bei der die Sensorvorrichtung der flatternden Folie zu folgen versucht und zeitweise eine solche Position einnimmt. Vielmehr beeinflusst der von dem Luftpolster ausgehende Druck seinerseits die Position und das Flatterverhalten der Folie.

In einer besonders günstigen Ausprägung der Erfindung kann daher auf den gesamten Aufwand der Positionsmessung der Folie, die ständigen schnellen Positionskorrekturen der Sensorvorrichtung und andere Maßnahmen, die in der EP 801 290 B1 und DE 195 11 939 A1 vorgeschlagen werden, um den Folgen des Folienflatterns vorzubeugen, verzichtet werden.

Gerade wenn die Sensorvorrichtung eine derart exponierte Position gegenüber dem flachen Material einnimmt und gegebenenfalls Druck auf dieses ausübt, ist es jedoch von Vorteil zu erkennen, wann und ob sich schadhafte Stellen des flachen Materials der Sensorvorrichtung durch die gegenseitige Relativbewegung nähern, da es sonst passieren kann, dass die Sensorvorrichtung an einer solchen Stelle ein Loch erzeugt beziehungsweise ein solches vergrößert und in das Material hineingreift. Durch die Relativbewegung des Materials zur Sensorvorrichtung entsteht dann großer Schaden am flachen Material und/oder an der Sensorvorrichtung.

Daher ist es gegebenenfalls vorteilhaft, solche Schäden zu erkennen und die Sensorvorrichtung vom Material zurückzuziehen.
Die Anwendung der erfindungsgemäßen Lehre auf Sensorvorrichtungen, die induktive oder kapazitive Messmittel umfassen, erscheint besonders vorteilhaft, da bei diesen Messmethoden der Einfluss der Abstandsschwankungen auf die Messergebnisse besonders groß ist. Die Form der Elektroden, bei kapazitiven Messvorrichtungen, die beide Elektroden auf einer Seite des flachen Materials haben, ist in den drei oben zitierten Druckschriften gezeigt. In der Regel umgreifen sich die Elektroden gegenseitig und haben ihre Wirkflächen auf der dem flachen Material zugewandten Fläche der Sensorvorrichtung. Oft sind die Elektroden auf dieser Fläche der Sensorvorrichtung zwei konzentrische Kreise, zwei Ellipsen oder haben die Form mäandernder, ineinander verschränkter Strecken.

Erfindungsgemäße Sensorvorrichtungen, die an Blasfolienanlagen zum Einsatz kommen, können an Stellen dieser Anlagen eingesetzt werden, die bisher dem Einsatz dieser Sensoren nicht offen stehen. Bisher findet man solche Sensoren - in der Förderrichtung der Folie - zwischen dem Kalibrierkorb und der Flachlegung. An dieser Stelle ist das Flattern der Folie relativ gering, der Folienschlauch hat noch einen runden Querschnitt und ist bereits weitgehend kristallisiert.

Ein Nachteil der Messung an dieser Stelle besteht in der doch erheblichen Strecke zwischen dem Blaskopf oder einem Kühlring, an dem Foliendickenabweichungen entstehen und durch das Anblasen von Luft oder das Heizen der Schmelze beziehungsweise auch geregelt werden können. Mit einem erfindungsgemäßen Meßsystem ist es möglich, beispielsweise zwischen dem Düsenspalt des Blaskopfes und dem Kalibrierkorb - falls ein solcher vorhanden ist - zu messen. Ein erfindungsgemäßes Messsystem kann daher auch in vorteilhafter Weise mit einer Vorrichtung nach der noch unveröffentlichten deutschen Patentanmeldung mit dem Aktenzeichen 10 2005 038 731.4 kombiniert werden. In dieser Druckschrift wird beschrieben, wie das Flatterverhalten der gerade extrudierten Folie direkt nach ihrer Extrusion eingeschränkt wird. Auch hierzu wird unter anderem die Verwendung porösen Materials vorgeschlagen. Auch das "Einklemmen" der Folie zwischen zwei Luftpolstern wird vorgeschlagen. Alle in dieser Druckschrift vorgeschlagenen Maßnahmen beziehungsweise Vorrichtungsmerkmale zur Führung der Folie beziehungsweise zur Begrenzung ihres Flatterverhaltens werden als Bestandteil der vorliegenden Druckschrift angesehen. Ein Rückgriff auf den Offenbarungsgehalt dieser Druckschrift im Rahmen des vorliegenden Patentbegehrens wird vorbehalten.

Ein weiterer Nachteil der Anordnung der Sensorvorrichtung in herkömmlicher Weise ist der hohe Vorrichtungsaufwand, der durch die separate Aufhängung (oft in mehreren Metern Höhe) und die Führung der Sensorvorrichtung entlang des Umfanges der Folienblase entsteht. Es erscheint möglich, die Sensorvorrichtung mit dem Kalibrierkorb zu kombinieren. Dies ist insbesondere bei erfindungsgemäßen Sensorvorrichtungen aufgrund der erwähnten Eigenschaften des charakteristischen Luftpolsters vorteilhaft.
Es können auch mehrere Sensoren entlang des Umfanges der Blase angebracht werden, was die Bewegung des Sensorsystems entlang des Umfanges erspart.

Auch an der Flachlegung können Sensorvorrichtungen angebracht werden. Werden sie nach einer tatsächlichen Flachlegung angebracht, so ist ein Sensor in der Regel nur noch in der Lage, die Dicke zweier eben gerade übereinander liegender Umfangsabschnitte des Folienschlauches gemeinsam zu messen. Durch spezifische Rechenverfahren oder eine optische Ermittlung der Lage der Grenzschicht zwischen beiden Lagen könnte jedoch auch diesem Problem begegnet werden.

Weitere Ausführungsbeispiele der Erfindung gehen aus der gegenständlichen Beschreibung und den Ansprüchen hervor.

Die einzelnen Figuren zeigen:
- Fig. 1: Eine Skizze einer ersten Blasfolienextrusionsanlage
- Fig. 2: Eine Skizze einer ersten Blasfolienextrusionsanlage
- Fig. 3: Ein Schnitt A-A aus Figur 1 mit zusätzlichen Merkmalen eines den Umfang einer Folienblase umlaufenden Sensorsystems
- Fig. 4: Eine Aufsicht auf die dem flachen Material zugewandte Seite einer kapazitiven Sensorvorrichtung

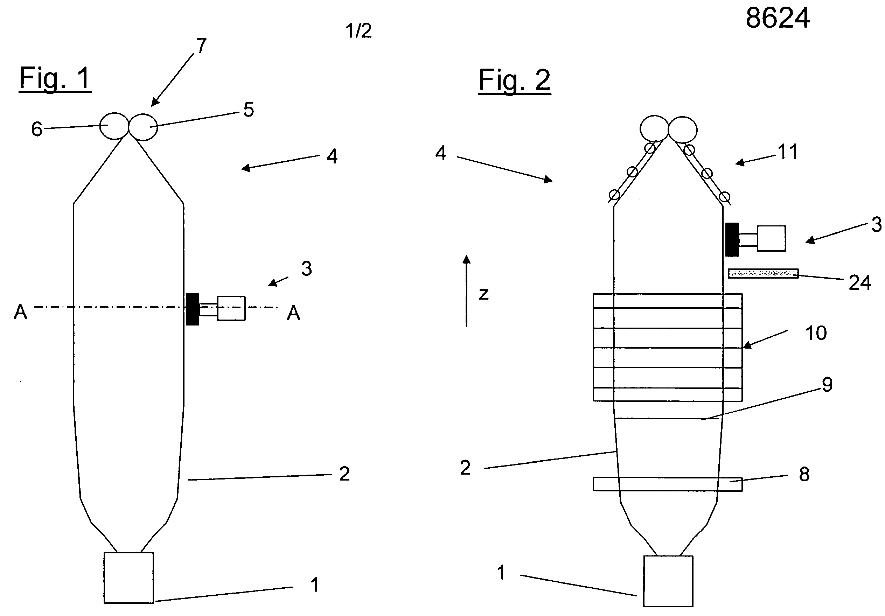

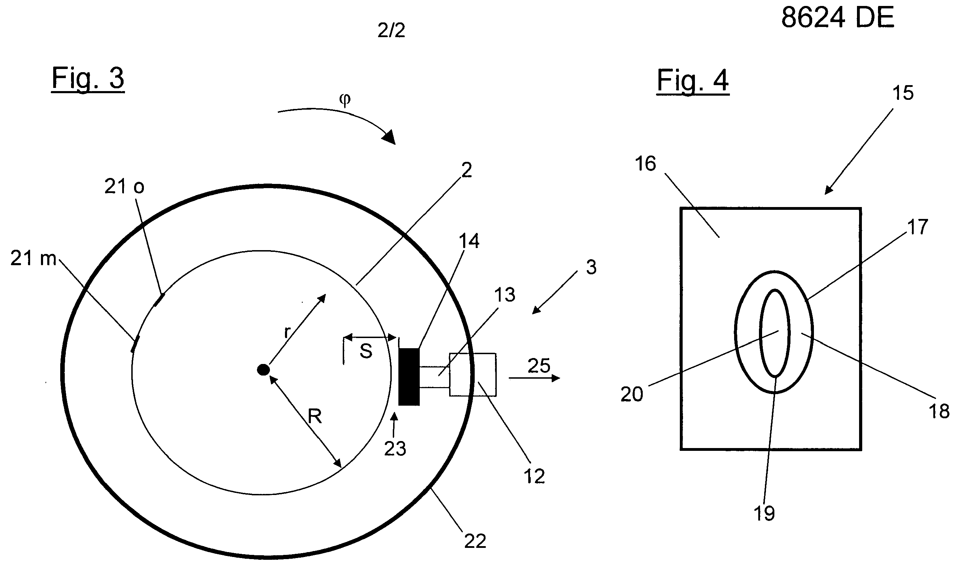

Fig. 1 zeigt eine erste Blasfolienextrusionsanlage 4, bei der eine Folienblase 2 beziehungsweise ein Folienschlauch von einem Blaskopf 1 in Richtung des Pfeils z extrudiert wird. Die Folienblase 2 wird von der Abquetschvorrichtung 7, die die Abquetschwalzen 5 und 6 umfasst, abgequetscht. Das Dickenmesssystem 3 nimmt einen typischen Platz ein. In der Regel wird ein solches Dickenmesssystem 2 eine Sensorvorrichtung beziehungsweise einen Sensorkopf 14, der in der in Figur 3 dargestellten Art um den Umfang der Folienblase 2 herumgeführt wird.

Figur 2 zeigt eine zweite Blasfolienextrusionsanlage 4, die zunächst die gleichen Merkmale wie die erste Blasfolienfolienextrusionsanlage aufweist. Bei der zweiten Blasfolienextrusionsanlage sind jedoch weitere teilweise notwendige, teilweise optionale Vorrichtungen gezeigt, um deren Lage in einer Extrusionsanlage darzustellen.
In der Förderrichtung z fällt zuerst der Außenkühlring 8, der Kühlluft gegen den Folienschlauch 2 bläst, auf. Bei moderneren Anlagen kann er die Temperatur der Kühlluft, die gegen Abschnitte 21 n des Umfangs des Folienschlauchs 2 geblasen wird, regeln, um Dickstellen auszugleichen. Auch eine Regelung der Schmelzetemperatur im Blaskopf ist zu diesem Zweck erprobt.
Als nächstes gegenüber Figur 1 hinzugefügtes Vorrichtungsmerkmal sei der Kalibrierkorb 10 erwähnt, der zur Festlegung des Durchmessers des Folienschlauches 2 beiträgt.
In Figur 2 umfasst das Sensorsystem 3 auch noch eine zweite Sensorvorrichtung 24, deren Funktion später noch einmal erklärt wird.
Vor der Abquetschvorrichtung 7 ist noch die Flachlegung 11 zu erwähnen. Ebenfalls dargestellt ist eine typische Lage des Frostbereichs 9, in dem das zunächst als Folienschmelze vorliegende Material zumindest teilweise kristallisiert oder Kristallite ausbildet.
In Figur 3 ist eine Schnittdarstellung eines um den Umfang einer Folienblase umlaufenden Sensorsystems 3 dargestellt. Der Zweck der meisten dargestellten Komponenten ist die Anstellung und die Bewegung der ersten Sensorvorrichtung 14 an beziehungsweise in die Nähe der Folienblase 2. Zum unmittelbaren Halten der Vorrichtung 14 dient der Arm 13, der an dem Sensorbock 12 derart angelenkt ist, dass der in der radialen Richtung der Folienblase r verschieblich ist. Der Sensorbock 12 ist seinerseits mit den beiden vorgenannten Komponenten 13, 14 zusammen entlang der Schiene 22 verfahrbar. In der Regel wird der Sensorbock während einer Messperiode kontinuierlich in Umfangsrichtung [(ϕ) Richtung] um die Folienblase herumgefahren. Zum besseren Verständnis sind noch einmal die Umfangsabschnitte der Folienblase 21m und 21o gezeigt. Sie symbolisieren, dass moderne Dickenregelverfahren oft die den Folienblasenumfang in N individuell regelbare Umfangsabschnitte oder -sektoren 21 n zerlegen.

In Figur 3 ist nicht gezeigt, dass die der Folie zugewandte Seite 15 des Sensorkopfs 14 oder das Luftpolsters 23 von der aus Arm 13 und Sensorbock 12 gebildeten Haltevorrichtung so positioniert werden, dass sie innerhalb des Sollradius R der Folienblase 2 liegen. Die Strecke S einer solchen möglichen Verschiebung beziehungsweise deren (übertriebener) Betrag ist durch den mit S bezeichneten Pfeil dargestellt. Die Vorteile einer solchen Verschiebung bei der Verwendung eines erfindungsgemäßen Sensorsystems 3 an einer Blasfolienanlage 4 wurden bereits diskutiert. Zu einer vorteilhaften Ausführungsform eines erfindungsgemäßen Sensorsystems kann auch eine zweite Sensorvorrichtung 24 gehören, die, wie in Figur 2 gezeigt, in der Transportrichtung der Folie z vor der ersten Sensorvorrichtung 14 die Folie auf Schäden und Löcher untersucht. Entdeckt sie ein solches Loch, wird die erste Sensorvorrichtung 14 durch eine Bewegung des Arms 13 von der Folie weggezogen. Die Aktoren für diese Bewegung, die durch den Pfeil 25 angedeutet ist, können im Arm 13 oder auf dem Sensorbock 12 angebracht sein. Durch die Bewegung werden Schäden an Folie 2 und erster Sensorvorrichtung 14 vermieden. Zu diesem Zweck eignen sich optische beziehungsweise auf elektromagnetische Strahlung reagierende Sensoren, die oft auch einen Gegenpart innerhalb der Folienblase benötigen.

Figur 4 zeigt eine Skizze der der Folie zugewandten Seite einer Sensorvorrichtung 14 eines kapazitiven Sensors. Die Seite 14 lässt sich unterteilen in den Bereich außerhalb der Elektroden 10, die äußere und die innere Elektrode 17 und 19, ein Dielektrikum 18 zwischen diesen Elektroden 17 und 19 sowie oft, aber keineswegs immer, einen Innenbereich 20.
Poröses oder mit Mikrolöchern versehenes Material kann sich in jedem dieser Bereiche befinden. Es kann auch in jedem dieser Bereiche derartiges Material sein, durch das Luft gepresst wird, um ein Luftpolster zu erzeugen. Derartiges Material ist jedoch auch dann gut für die Stabilität des Luftpolsters, wenn gar keine Luft unmittelbar an dieser Stelle durch das Material - sondern nur an benachbarten Stellen gepresst wird.
Zumindest eine Elektrode, oder zumindest deren Wirkfläche, könnte auch aus einem solchen Material bestehen. Um das elektrische Feld möglichst günstig zu positionieren, könnte hierzu ein Metall, vorzugsweise Sintermetall gewählt werden.

Generell ist es insbesondere im Zusammenhang mit einem Hereindrücken des Sensors in die Folienblase von Vorteil, wenn das Sintermaterial feinkörnig ist beziehungsweise wenn das Material feine Löcher aufweist. In diesem Zusammenhang wird eine Korn- beziehungsweise Lochgröße kleiner 100 µm als fein eingestuft. Noch vorteilhafter sind Korn- oder Lochgrößen kleiner 80 µm oder gar kleiner 50 µm. Bei solchen Korn- oder Lochgrößen ist es möglich, Luft mit relativ hohem Druck zum Aufbau des Luftpolsters zu verwenden, was zu einem stabilen Luftposter führt. Ein relativ hoher Druck ist schon bei 50 oder 100 Milliliter bis ein Bar Überdruck gegeben.

| **Bezugszeichenliste** | |
|---|---|
| 1 | Blaskopf |
| 2 | Folienblase/-schlauch |
| 3 | Sensorsystem |
| 4 | Blasfolienanlage |
| 5 | Abquetschwalze |
| 6 | Abquetschwalze |
| 7 | Abquetschvorrichtung |
| 8 | Außenkühlring |
| 9 | Frostbereich |
| 10 | Kalibrierkorb |
| 11 | Abquetschvorrichtung |
| 12 | Sensorbock |
| 13 | Arm |
| 14 | (erste) Sensorvorrichtung, Sensorkopf |
| 15 | der Folie zugewandte Seite der Sensorvorrichtung |
| 16 | Bereich außerhalb der Elektroden |
| 17 | äußere Elektrode (Wirkfläche) |
| 18 | Dielelektrikum zwischen den Elektroden |
| 19 | innere Elektrode (Wirkfläche) |
| 20 | Innenbereich |
| 21 n | Umfangsabschnitt |
| 22 | Schiene |
| 23 | Luftpolster |
| 24 | zweite Sensorvorrichtung |
| 25 | Pfeil in Bewegungsrichtung des Sensors 14 von der Folie 2 weg |
| ϕ | Umfangsrichtung der Folienblase |
| r | radiale Richtung der Folienblase |
| z | Förder- bzw. axiale Richtung der Folienblase |
| R | Sollradius der Folienblase |
| S | Strecke, um den das Luftpolster in den Sollradius der Blase eingreift |

## Patentansprüche

1. Sensorsystem (3) zum Messen der Dicke flachen, relativ zum Sensorsystem (3) bewegten Materials (2), welches (1) folgende Merkmale aufweist:
- eine erste Sensorvorrichtung (14) zur Messung der Dicke des flachen Materials (2), welches zum Zeitpunkt der Messung als Folienblase (2) vorliegt,
- Mittel zum Erzeugen eines Luftpolsters (23), welche derart angeordnet sind, dass zwischen der zumindest einen, dem flachen Material (2) zugewandten Seite der Sensorvorrichtung (15) und dem flachen Material (2) im Betrieb ein Luftpolster (23) entsteht,
- wobei die erste Sensorvorrichtung (14) im Bereich des Luftpolsters (23) Flächenabschnitte aus porösem und/oder mit Mikrolöchern versehene Material aufweist
**dadurch gekennzeichnet, dass**
- das Sensorsystem (3) kapazitive Messmittel enthält, welche zumindest zwei Elektroden (17,19) umfassen,
- die sich auf einer dem flachen Material (2) zugewandten Seite des Kapazitiven Sensors befinden
- wobei sich das Luftpolster (23) der von außerhalb der Folienblase (2) messenden ersten Sensorvorrichtung (14) in der radialen Richtung (r) der Folienblase (2) innerhalb des Sollradius (R) derselben befindet,

2. Sensorsystem nach dem vorstehenden Anspruch,
**gekennzeichnet durch**
- eine zweite Sensorvorrichtung (24) zum Erkennen von Schäden oder Löchern in dem flachen Material (2),
- welche (24) derart zu der ersten Sensorvorrichtung (14) und dem flachen Material (2) angeordnet ist,
- dass sie Schäden oder Löcher in dem flachen Material (2) erkennt, bevor die Schäden oder Löcher **durch** die Relativbewegung zwischen flachem Material (2) und erster Sensorvorrichtung (14) den Bereich des Luftpolsters (23) erreichen.

3. Sensorsystem nach dem vorstehenden Anspruch,
**gekennzeichnet durch**
eine Rückholvorrichtung (12,13) zur Veränderung des Abstandes zwischen der ersten Sensorvorrichtung (14) und dem flachen Material (2).

4. Sensorsystem nach einem der vorstehenden Ansprüche
**dadurch gekennzeichnet, dass**
poröses und/oder mit Mikrolöchern versehenes Material in zumindest einem der folgenden Teilbereiche der zumindest einen, dem flachen Material (2) zugewandten Fläche der Sensorvorrichtung angeordnet ist:
- zwischen (18) den dem flachen Material (2) zugewandten Wirkflächen der Elektroden (17,19),
- um die (16) dem flachen Material (2) zugewandten Wirkflächen der Elektroden (17,19)
auf den dem flachen Material (2) zugewandten Wirkflächen der Elektroden (17,19).

5. Blasfolienanlage (4) zur Extrusion flachen Materials, das zunächst als Folienschlauch vorliegt, welches eine erste Sensorvorrichtung zum Messen der Dicke des flachen, relativ zur Sensorvorrichtung (14) bewegten Materials (2) mit den folgenden Merkmalen aufweist:
- eine erste Sensorvorrichtung (14) zur Messung der Dicke des flachen Materials (2), welches zum Zeitpunkt der Messung als Folienblase (2) vorliegt,
- Mittel zum Erzeugen eines Luftpolsters (23), welche derart angeordnet sind, dass zwischen der zumindest einen, dem flachen Material (2) zugewandten Seite der Sensorvorrichtung (15) und dem flachen Material (2) im Betrieb ein Luftpolster (23) entsteht,
- wobei die erste Sensorvorrichtung (14) im Bereich des Luftpolsters (23) Flächenabschnitte aus porösem und/oder mit Mikrolöchern versehenem Material aufweist
**dadurch gekennzeichnet, dass**
- die Sensorvorrichtung (14) kapazitive Messmittel enthält, welche zumindest zwei Elektroden (17,19) umfassen,
- die sich auf einer dem flachen Material (2) zugewandten Seite des Kapazitiven Sensors befinden,
- wobei sich das Luftpolster (23) der von außerhalb der Folienblase (2) messenden ersten Sensarvorrichtung (14) In der radialen Richtung (r) der Folienblase (2) innerhalb des Sollradius (R) derselben befindet.

6. Blasfolienanlage (4) nach dem vorstehenden Anspruch,
**gekennzeichnet durch**
eine Sensorvorrichtung (14), mit welcher (3) die Foliendicke an zumindest einer der folgenden Stellen der Blasfolienanlage (4) messbar ist:
- zwischen dem Blaskopf (1) und dem Frostbereich (9) des Folienschlauches
- am Kalibrierkorb (10)
- zwischen dem Kalibrierkorb (10) und der Flachlegung (11)
- an der Flachlegung (11)
- an der Abquetschung (7)
- nach der Flachlegung (11).

7. Verfahren zum Betrieb einer Blasfolienanlage (4) zur Herstellung von Folie (3),
- bei dem die Messung der Dicke der Folie (2) während des Betriebes der Anlage (4) durch eine Sensorvorrichtung (14) vorgenommen wird während die Folie als Folienblase vorliegt und
- bei dem ein Luftpolster (23) zwischen der zumindest einen der Folie (2) zugewandten Seite der Sensorvorrichtung (14) und der Folie (2) erzeugt wird,
- wobei das Luftpolster (23) erzeugt wird, indem Luft durch poröses oder mit Mikrolöchern versehenes Material gepresst wird
**dadurch gekennzeichnet, dass**
- kapazitive Messmittel enthält, welche zumindest zwei Elektroden (17,19) umfassen zur Messung der Dicke des flachen Materials verwendet werden,
- die (17,19) sich auf einer dem flachen Material (2) zugewandten Seite des Kapazitiven Sensors (14) befinden,
- und wobei das Luftpolster (23) der von außerhalb der Folienblase (2) messenden ersten Sensorvorrichtung (14) in der radialen Richtung (r) der Folienblase (2) so positioniert wird, dass es (23) innerhalb des Sollradius (R) derselben (2) befindet.

8. Verfahren nach dem vorstehenden Anspruch,
**dadurch gekennzeichnet, dass**
die der Folie (2) zugewandte Fläche (15) der ersten Sensorvorrichtung (14) sich bei der Messung außerhalb der Folienblase (2) befindet,
jedoch von einer Haltevorrichtung (12,13) während einer Messperiode derart gegen die Folienblase (2) angestellt wird,
dass die der Folie (2) zugewandte Fläche der ersten Sensorvorrichtung (14) innerhalb des Sollradius (R) der Folienblase (2) positioniert ist.

## Claims

1. Sensor system (3) for measuring the thickness of flat material (2) moved relative to the sensor system (3), which (1) has the following features:
- a first sensor device (14) for measuring the thickness of the flat material (2), which at the time of the measurement is present as a film bubble (2),
- means for producing an air cushion (23), which are arranged in such a way that, during operation, an air cushion (23) is produced between the at least one side of the sensor device (15) that faces the flat material (2) and the flat material (2),
- the first sensor device (14) having surface sections made of material that is porous and/or provided with micro-holes in the area of the air cushion (23),
**characterized in that**
- the sensor system (3) contains capacitive measuring means which comprise at least two electrodes (17, 19),
- which are located on a side of the capacitive sensor that faces the flat material (2)
- wherein the air cushion (23) of the first sensor device (14) measuring from outside the film bubble (2) is located in the radial direction (r) of the film bubble (2) within the intended radius (R) of the same.

2. Sensor system according to the preceding claim,
**characterized by**
- a second sensor device (24) for detecting damage or holes in the flat material (2),
- which (24) is arranged in relation to the first sensor device (14) and the flat material (2) in such a way
- that it detects damage or holes in the flat material (2) before the damage or holes reach the region of the air cushion (23) as a result of the relative movement between flat material (2) and first sensor device (14).

3. Sensor system according to the preceding claim,
**characterized by**
a withdrawal device (12, 13) for changing the distance between the first sensor device (14) and the flat material (2).

4. Sensor system according to one of the preceding claims,
**characterized in that**
material that is porous and/or provided with micro-holes is arranged in at least one of the following subregions of the at least one surface of the sensor device that faces the flat material (2) :
- between (18) the active surfaces of the electrodes (17, 19) that face the flat material (2),
- around the (16) active surfaces of the electrodes (17, 19) that face the flat material (2),
on the active surfaces of the electrodes (17, 19) that face the flat material (2).

5. Blown film line (4) for the Extrusion of flat material which is initially present as a film tube which has a first sensor device for measuring the thickness of the flat material (2) moved relative to the sensor device (14), having the following features:
- a first sensor device (14) for measuring the thickness of the flat material (2) which, at the time of the measurement, is present as a film bubble (2),
- means for producing an air cushion (23), which are arranged in such a way that, during operation, an air cushion (23) is produced between the at least one side of the sensor device (15) that faces the flat material. (2) and the flat material (2),
- the first sensor device (14) having surface sections made of material that is porous and/or provided with micro-holes in the area of the air cushion (23),
**characterized in that**
- the sensor system (14) contains capacitive measuring means which comprise at least two electrodes (17, 19),
- which are located on a side of the capacitive sensor that faces the flat material (2)
- wherein the air cushion (23) of the first sensor device (14) measuring from outside the film bubble (2) is located in the radial direction (r) of the film bubble (2) within the intended radius (R) of the same.

6. Blown film line (4) according to the preceding claim,
**characterized by**
a sensor device (14), with which (3) the film thickness can be measured at at least one of the following points of the blown film line (4):
- between the blower head (1) and the chilling region (9) of the film tube
- at the calibration cage (10)
- between the calibration cage (10) and the collapsing frame (11)
- at the collapsing frame (11)
- at the squeeze (7)
- after the collapsing frame (11).

7. Method for operating a blown film line (4) for producing film (3)
- in which the measurement of the thickness of the film (2) is performed by a sensor device (14) during the operation of the line (4), while the film is present as a film bubble, and
- in which an air cushion (23) is produced between the at least one side of the sensor device (14) that faces the film (2) and the film (2),
- the air cushion (23) being produced by air being pressed through material that is porous or provided with micro-holes,
**characterized in that**
- contains capacitive measuring means, which comprise at least two electrodes (17, 19) used for measuring the thickness of the flat material,
- which (17, 19) are located on the side of the capacitive sensor (14) that faces the flat material (2),
- and wherein the air cushion (23) of the first sensor device (14) measuring from outside the film bubble (2) is positioned in the radial direction (r) of the film bubble (2) such that it (23) is located within the intended radius (R) of the same (2).

8. Method according to the preceding claim,
**characterized in that**
the surface (15) of the first sensor device (14) that faces the film (2) is located outside the film bubble (2) during the measurement,
but, during a measuring period, is set against the film bubble (2) by a holding device (12, 13),
such that the surface of the first sensor device (14) that faces the film (2) is positioned within the intended radius (R) of the film bubble (2).

## Revendications

1. Système de capteurs (3) servant à mesurer l'épaisseur d'un matériau plat (2) se déplaçant par rapport au système de capteurs (3), lequel (1) comporte les éléments suivants :
- un premier dispositif de capteurs (14) pour la mesure de l'épaisseur du matériau plat (2) qui est présent à l'instant de la mesure sous la forme d'une feuille soufflée (2),
- des moyens destinés à produire une poche d'air (23), lesquels moyen sont disposés de manière à ce qu'une poche d'air (23) soit créée, lors du fonctionnement, entre l'au moins une face du dispositif de capteurs (15) qui est tournée vers le matériau plat (2) et le matériau plat (2),
- dans lequel le premier dispositif de capteurs (14) comporte dans la région de la poche d'air (23), des sections de surface constituées d'un matériau poreux et/ou comprenant des micro-trous,
**caractérisé en ce que**
- le système de capteurs (3) comporte des moyens de mesure capacitifs comprenant au moins deux électrodes (17, 19),
- qui sont situées sur une face du capteur capacitif qui est tournée vers le matériau plat (2),
- dans lequel la poche d'air (23) du premier dispositif de capteurs (14) mesurant la feuille soufflée (2) depuis l'extérieur est située dans la direction radiale (r) de la feuille soufflée (2) en-deçà de son rayon nominal (R).

2. Système de capteurs selon la revendication précédente,
**caractérisé par**
- un second dispositif de capteurs (24) servant à détecter des endommagements ou des trous dans le matériau plat (2),
- lequel dispositif (24) est agencé par rapport au premier dispositif de capteurs (14) et au matériau plat (2),
- de manière à détecter des endommagements ou des trous dans le matériau plat (2) avant que les endommagements ou les trous n'atteignent la zone de à poche d'air (23) du fait du mouvement relatif entre le matériau plat (2) et le premier dispositif de capteurs (14).

3. Système de capteurs selon la revendication précédente,
**caractérisé par** un dispositif de rappel (12, 13) servant à modifier la distance entre le premier dispositif de capteurs (14) et le matériau plat (2).

4. Système de capteurs selon l'une quelconque des revendications précédentes,
**caractérisé en ce que** le matériau poreux et/ou présentant des micros-trous est disposé dans au moins l'une des zones partielles suivantes de l'au moins une surface tournée vers le matériau plat (2), du dispositif de capteurs :
- entre (18) les surfaces de travail des électrodes (17, 19), qui sont tournées vers le matériau plat (2),
- autour des surfaces de travail des électrodes (17, 19), qui (16) sont tournées vers le matériau plat (2),
- sur les surfaces de travail des électrodes (17, 19), qui sont tournées vers le matériau plat (2).

5. Installation de soufflage de feuilles (4) servant à l'extrusion d'un matériau plat qui est tout d'abord présent sous la forme d'une feuille tubulaire, comportant un premier dispositif de capteurs servant à mesurer l'épaisseur du matériau plat (2) se déplaçant par rapport au dispositif de capteurs (14), comportant les éléments suivants :
- un premier dispositif de capteurs (14) pour la mesure de l'épaisseur du matériau plat (2) qui est présent à l'instant de la mesure sous la forme d'une feuille soufflée (2),
- des moyens destinés à produire une poche d'air (23), lesquels moyens sont disposés de manière à ce que, lors du fonctionnement, une poche d'air (23) soit créée entre l'au moins une face du dispositif de capteurs (15) qui est tournée vers le matériau plat (2) et le matériau plat (2),
- dans lequel le premier dispositif de capteurs (14) comporte dans la région de la poche d'air (23) des sections de surface constituées d'un matériau poreux et/ou comprenant des micro-trous,
**caractérisé en ce que**
- le dispositif de capteurs (14) comporte des moyens de mesure capacitifs comprenant au moins deux électrodes (17, 19),
- qui sont situées sur une face du capteur capacitif qui est tournée vers le matériau plat (2),
- dans lequel la poche d'air (23) du premier dispositif de capteurs (14) mesurant la feuille soufflée (2) depuis l'extérieur est située dans la direction radiale (r) de la feuille soufflée (2) en-deçà de son rayon nominal (R).

6. Installation de soufflage de feuilles (4) selon la revendication précédente, **caractérisé par** un dispositif de capteurs (14) au moyen duquel (3) l'épaisseur de feuille peut être mesurée en au moins l'un des points suivants de l'installation de soufflage de feuilles (4) :
- entre la tête de soufflage (1) et la zone de gel (9) de la feuille tubulaire,
- sur la cage d'étalonnage (10),
- entre la cage d'étalonnage (10) et le point de mise à plat (11),
- sur le point de mise à plat (11),
- sur le point de pincement (7),
- après le point de mise à plat (11).

7. Procédé de mise en fonctionnement d'une installation de soufflage de feuilles (4) destiné à fabriquer des feuilles (3),
- dans lequel la mesure de l'épaisseur de la feuille (2) pendant le fonctionnement de l'installation (4) est effectuée par un dispositif de capteurs (14) pendant que la feuille est présente sous la forme d'une feuille soufflée, et
- dans lequel une poche d'air (23) est créée entre l'au mois une face du dispositif de capteurs (14) qui est tournée vers la feuille (2) et la feuille (2),
- dans lequel la poche d'air (23) est créée en comprimant de l'air à travers un matériau poreux ou présentant des micro-trous,
**caractérisé en ce que**
- comporte des moyens de mesure capacitifs comprenant au moins deux électrodes (17, 19) pour la mesure de l'épaisseur du matériau plat,
- qui (17, 19) sont situées sur une face du capteur capacitif (14) qui est tournée vers le matériau plat (2),
- et dans lequel la poche d'air (23) du premier dispositif de capteurs (14) mesurant la feuille soufflée (2) depuis l'extérieur est positionnée dans la direction radiale (r) de la feuille soufflée (2) de manière à ce qu'elle (23) se situe en-deçà de son (12) rayon nominal (R).

8. Procédé selon la revendication précédente, **caractérisé en ce que**,
lors de la mesure, la surface (15) du premier dispositif de capteurs (14) qui est tournée vers la feuille (2) est située à l'extérieur de feuille soufflée (2),
mais est amenée par un dispositif de maintien (12, 13) contre à feuille soufflée (2) pendant une période de mesure, de manière à ce que
la surface du premier dispositif de capteurs (14) qui est tournée vers la feuille (2) soit positionnée endeçà du rayon nominal. (R) de la feuille soufflée (2).
